# EUROPÄISCHE PATENTSCHRIFT

(11) **EP 1 229 416 B1**
(45) Veröffentlichungstag und Bekanntmachung des Hinweises auf die Patenterteilung: **10.12.2003**
(21) Anmeldenummer: 02075324.0
(22) Anmeldetag: 25.01.2002
(51) Int. Cl.: G05D 23/02

(54) **Positionierungsvorrichtung für ein Ventil**
Positioning device on a valve
Dispositif de réglage de position de soupape

(30) Priorität: 03.02.2001 DE 10104897
(43) Veröffentlichungstag der Anmeldung: 07.08.2002
(73) Patentinhaber: Danfoss A/S, 6430 Nordborg (DK)
(72) Erfinder: Larsen, Arne Borge, 8660 Skanderborg (DK); Frederiksen, Bjarne, 8632 Lemming (DK)

(56) Entgegenhaltungen:
- DE-A- 2 518 443
- DE-A- 4 344 773
- DE-A- 19 909 096
- DE-A- 19 920 864
- DE-C- 3 153 654
- DE-C- 19 910 224
- DE-U- 29 914 101

## Beschreibung

Die Erfindung bezieht sich auf eine Einstellvorrichtung für ein Ventil, insbesondere Temperaturregler für ein Heizkörperventil, mit einem durch axiale Schlitze in Federarme unterteilten Stutzen für den Anschluß an einen mit einer vorbestimmten Teilung profilierten Anschlußteil des Ventils; mit einem ringförmigen Adapter, der mit dem Stutzen in abgestuften Drehwinkelstellungen relativ zum Ventil unverdrehbar kuppelbar ist und eine mit der Profilierung des Anschlußteils des Ventils unverdrehbar in Eingriff bringbare Profilierung mit einer vorbestimmten Teilung aufweist; und mit einer den Stutzen umgebenden Spannvorrichtung, die im gespannten Zustand die Federarme des Stutzens radial gegen den Anschlußteil des Ventils drückt.

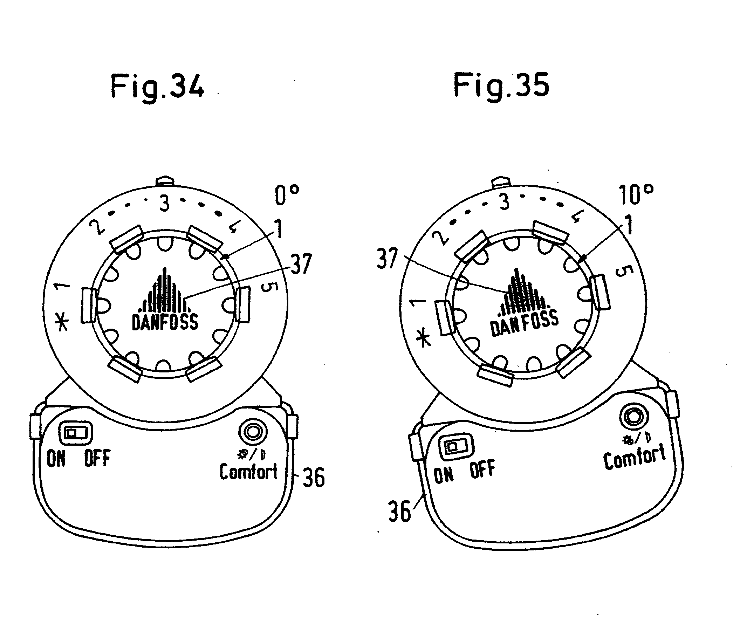

Ein von der Anmelderin bislang vertriebener Temperaturregler (auch "Thermostataufsatz" genannt), hat am Gehäuse einen Stutzen mit einem Innen-Mehrkant zum drehfesten Aufstecken auf dem außen zumeist mit einem Profil in Form eines Sechskants versehenen Gehäuse eines Stellventils eines Heizkörpers. Die Teilung des Innen-Mehrkants ist kleiner als die des Profils des Ventilgehäuses. Dadurch läßt sich der Temperaturregler zumeist in einer solchen Drehwinkellage auf das Ventilgehäuse aufstecken, in der eine an der Vorderseite des Ventilgehäuses angebrachte Markierung, relativ zu der ein mit einer Skala versehener Einstellring zum Einstellen des Temperatursollwerts verdrehbar ist, zumindest annähernd vertikal nach oben gerichtet ist. Eine geringfügige Fehlausrichtung der Markierung bei nicht hinreichend feiner Teilung des Innen-Mehrkants, bei der sich der Temperaturregler in Drehwinkelschritten von beispielsweise nur 10° relativ zum Ventilgehäuse auf dieses aufstecken ließe, wäre optisch nicht störend. Wenn am Gehäuse des Temperaturreglers jedoch, wie bei neueren Temperaturreglern, noch ein relativ weit nach unten ragender Gehäuseteil zur Aufnahme einer elektronischen oder ferngesteuerten Stelleinrichtung für den Sollwertgeber des Temperaturreglers ausgebildet ist, wie es in Fig. 34 und Fig. 35 der beiliegenden Zeichnung dargestellt ist, dann wäre der optische Eindruck bei einer Fehlausrichtung von maximal 10° (vgl. Fig. 35) gegenüber einer genauen Ausrichtung (vgl. Fig. 34) in erheblichem Maße optisch störend.

Man ist daher bestrebt, insbesondere bei derartigen Temperaturreglern, wie sie in den Fig. 34 und 35 dargestellt sind, eine feiner abgestufte Verstellung der Drehwinkellage des Temperaturreglers relativ zum Stellventil des Heizkörpers zu ermöglichen.

Ein Temperaturregler, wie er eingangs beschrieben und aus der deutschen Gebrauchsmusterschrift DE 29 914 101 U1 bekannt ist, ermöglicht dies unter Verwendung eines ringförmigen Adapters, der am Außenumfang eine Verzahnung mit einer sehr viel kleineren Teilung als die des Innen-Mehrkants des Anschlußstutzens des Temperaturreglers und des Außen-Mehrkants des Ventilgehäuses aufweist. Der Adapter wird separat vom Temperaturregler gehandhabt. Er wird vor der Montage des Temperaturreglers auf das Ventilgehäuse aufgesteckt. Beim Abnehmen des Temperaturreglers kann der Adapter verloren gehen, wenn er nicht manuell oder mit engen Maßtoleranzen auf dem Ventilgehäuse festgehalten wird. Eine reibschlüssige Verbindung mit engen Maßtoleranzen zwischen Ventilgehäuse und Adapter ist nicht in allen Fällen möglich. Das Anbringen und Abnehmen des Temperaturreglers am bzw. vom Ventilgehäuse ist daher schwierig.

Der Erfindung liegt die Aufgabe zugrunde, eine Einstellvorrichtung der eingangs genannten Art anzugeben, deren Anbringung und Abnahme am bzw. vom Ventilgehäuse einfacher ist.

Erfindungsgemäß ist diese Aufgabe dadurch gelöst, daß der Adapter an dem Stutzen im ungespannten Zustand der Spannvorrichtung gegen ein unbeabsichtigtes axiales Entfernen arretierbar ist.

Bei dieser Lösung kann sich der arretierte Adapter nicht vor dem Anbringen oder Abnehmen der Einstellvorrichtung am bzw. vom Ventil unabsichtlich vom Stutzen trennen. Das Anbringen bzw. Abnehmen der Einstellvorrichtung wird dadurch erleichtert.

Adapter und Stutzen können zwar reibschlüssig miteinander verbindbar sein, um ihre relative Drehwinkellage beliebig wählen zu können. Vorzugsweise ist jedoch dafür gesorgt, daß der Stutzen mit einer Verzahnung versehen ist und der Adapter eine mit der Verzahnung des Stutzens unverdrehbar in Eingriff bringbare Verzahnung mit einer vorbestimmten Teilung aufweist und am Stutzen axial anbringbar ist; wobei wenigstens zwei aller Teilungen voneinander abweichen. Hierbei läßt sich ihre relative Drehwinkellage mit geringerer Spannkraft der Spannvorrichtung fester einstellen.

Der Adapter kann im Schnappsitz am Stutzen arretierbar sein. Diese Art der Lagesicherung des Adapters ist besonders einfach auszuführen.

Hierfür können der Adapter und Stutzen jeweils wenigstens einen radialen Rastvorsprung aufweisen, die sich geringfügig überlappen und von denen wenigstens der eine der sich überlappenden Rastvorsprünge durch den anderen beim Zusammensetzen von Stutzen und Adapter radial zur Seite gedrückt wird. Diese Art von Schnappverschluß läßt sich leicht herstellen und bedienen.

Sodann kann die Verzahnung des Stutzens am inneren Umfang oder einer radialen inneren Ringschulter oder einer Stirnseite des Stutzens ausgebildet und die Verzahnung des Adapters der Verzahnung des Stutzens zugekehrt sein. Die erste Alternative erleichtert das Zusammenstecken von Adapter und Stutzen in der gewünschten relativen Drehwinkellage, da es leicht visuell kontrolliert werden kann. Die zweite und dritte Alternative gewährleisten einen axial festen gegenseitigen Eingriff der Verzahnungen nach dem Spannen der Spannvorrichtung.

Vorzugsweise ist dafür gesorgt, daß die Verzahnung des Stutzens an einer Stirnseite des Stutzens, die Verzahnung des Adapters an einer der Verzahnung des Stutzens zugekehrten Stirnseite des Adapters und die Profilierung des Adapters an einer inneren Umfangsseite des Adapters ausgebildet ist, daß die Spannvorrichtung eine Überwurfmutter ist, die mit einem radial inneren Vorsprung eine äußere Hinterschneidung des Stutzens hintergreift, und daß der Adapter in eine Ringnut zwischen dem radialen Vorsprung der Überwurfmutter und ihrem Innengewinde über das Innengewinde hinweg einrastbar oder durch das Innengewinde hindurch einschraubbar ist. Bei dieser Ausbildung bildet das Innengewinde der Überwurfmutter gleichzeitig einen Vorsprung des Schnappsitzes, oder es bewirkt allein die Axialsicherung des Adapter, nachdem dieser mittels eines in das Innengewinde der Überwurfmutter passenden Außengewindes durch das Innengewinde hindurchgeschraubt und in der Ringnut aufgenommen worden ist.

Sodann ist es günstig, wenn nach dem Anbringen des Adapters am Stutzen die Verzahnungen durch das Spannen der Spannvorrichtung in Eingriff gelangen und bis zum gegenseitigen Eingriff durch das Spannen ein hinreichendes axiales Spiel zwischen Adapter und Stutzen verbleibt, das es ermöglicht, die Verzahnungen von Adapter und Stutzen für eine Verdrehung des Adapters relativ zum Stutzen und damit der Einstellvorrichtung in eine gewünschte Drehwinkellage relativ zum Ventil außer Eingriff zu halten. Der Adapter kann dann noch nach dem Anbringen am Stutzen vor dem Spannen der Spannvorrichtung bzw. dem Festziehen der Überwurfmutter relativ zum Stutzen in die gewünschte Drehwinkellage gebracht werden, ohne aus dem Stutzen herauszufallen.

Vorzugsweise ist dafür gesorgt, daß die Teilungen der Verzahnung des Stutzens und der Verzahnung des Adapters gleich und kleiner als die Teilung der Profilierung des Adapters sind und die Teilung der Profilierung des Adapters kleiner als die der Profilierung des Ventils ist. Dies ermöglicht eine besonders feinstufige Ausrichtung der Einstellvorrichtung relativ zum Ventil.

Die Erfindung und ihre Weiterbildungen werden nachstehend anhand der beiliegenden Zeichnungen bevorzugter Ausführungsbeispiele näher beschrieben. Darin zeigen:
- Fig. 1: einen Teil eines Axialschnitts durch eine erfindungsgemäße Einstellvorrichtung in Form eines Temperaturreglers mit einer Spannvorrichtung in Form einer Überwurfmutter, bevor diese nach der Montage an dem Gehäuse eines Heizkörperventils festgezogen worden ist,
- Fig. 2: den gleichen Axialschnitt wie den nach Fig. 1, jedoch in einer Lage, in der die Einstellvorrichtung an einem Heizkörperventil befestigt ist, jedoch ohne das Heizkörperventil,
- Fig. 3: eine Unteransicht der Einstellvorrichtung nach Fig. 1,
- Fig. 4: die gleiche Schnittansicht wie die nach Fig. 1, jedoch ohne den im Schnappsitz darin eingesetzten ringförmigen Adapter,
- Fig. 5: eine Innenansicht des Teils der Einstellvorrichtung nach Fig. 4 ohne den Adapter,
- Fig. 6: den ringförmigen Adapter nach Fig. 1 im Axialschnitt,
- Fig. 7: eine Draufsicht auf eine stirnseitige Verzahnung des Adapters nach Fig. 6,
- Fig. 8: eine Unteransicht des Adapters nach Fig. 6,
- Fig. 9: einen Axialschnitt eines Teils eines zweiten Ausführungsbeispiels einer erfindungsgemäßen Einstellvorrichtung in Form eines Temperaturreglers für ein Heizkörperventil im Schnitt IX-IX der Fig. 10,
- Fig. 10: eine Unteransicht der Einstellvorrichtung nach Fig. 9,
- Fig. 11: eine Ansicht eines Teils eines Stutzens der Einstellvorrichtung zum Anschließen an dem Gehäuse eines Heizkörperventils in der Schnittebene XI-XI der Fig. 13,
- Fig. 12: einen vergrößerten Ausschnitt der Fig. 9,
- Fig. 13: eine Innenansicht der Einstellvorrichtung gemäß Fig. 11 ohne den Adapter,
- Fig. 14: eine Draufsicht des Adapters nach Fig. 9, und zwar auf eine mit der Verzahnung versehene Stirnseite,
- Fig. 15: einen vergrößerten Ausschnitt eines dritten Ausführungsbeispiels einer erfindungsgemäßen Einstellvorrichtung,
- Fig. 16: einen vergrößerten Ausschnitt eines fünften Ausführungsbeispiels einer erfindungsgemäßen Einstellvorrichtung,
- Fig. 17: einen vergrößerten Ausschnitt eines sechsten Ausführungsbeispiels einer erfindungsgemäßen Einstellvorrichtung,
- Fig. 18: eine Unteransicht eines siebten Ausführungsbeispiels einer erfindungsgemäßen Einstellvorrichtung,
- Fig. 19: einen vergrößerten Ausschnitt der Einstellvorrichtung nach Fig. 18,
- Fig. 20: einen Axialschnitt eines Teils eines achten Ausführungsbeispiels einer erfindungsgemäßen Einstellvorrichtung im Schnitt XX nach Fig. 24 im festgezogenen Zustand der Überwurfmutter,
- Fig. 21: die gleiche Ansicht wie die nach Fig. 20, jedoch vor dem Festziehen der Überwurfmutter,
- Fig. 22: einen vergrößerten Ausschnitt der Einstellvorrichtung nach Fig. 21,
- Fig. 23: eine Unteransicht der Einstellvorrichtung nach Fig. 20, jedoch ohne den Adapter,
- Fig. 24: eine Unteransicht der Einstellvorrichtung nach Fig. 20,
- Fig. 25: eine Draufsicht auf die verzahnte Stirnseite des Adapters nach Fig. 20,
- Fig. 26: eine Draufsicht auf die unverzahnte Stirnseite des Adapters nach Fig. 20,
- Fig. 27: eine Unteransicht eines neunten Ausführungsbeispiels einer erfindungsgemäßen Einstellvorrichtung, teilweise im Schnitt,
- Fig. 28: eine Querschnittsansicht eines weiteren Ausführungsbeispiels einer erfindungsgemäßen Einstellvorrichtung,
- Fig. 29: einen Axialschnitt eines Teils eines weiteren Ausführungsbeispiels einer erfindungsgemäßen Einstellvorrichtung, die an einem Anschlußteil eines Stellventils eines Heizkörpers angebracht ist, jedoch vor dem Festziehen der Überwurfmutter,
- Fig. 30: den Schnitt XXX-XXX der Fig. 29,
- Fig. 31: einen vergrößerten Ausschnitt der Einstellvorrichtung nach Fig. 29,
- Fig. 32: den Adapter der Einstellvorrichtung nach Fig. 29 im Axialschnitt,
- Fig. 33: eine Draufsicht auf den Adapter nach Fig. 32,
- Fig. 34: eine Vorderansicht einer Einstellvorrichtung in Form eines Temperaturreglers in einer relativen Drehwinkellage von 0° in bezug auf eine vertikale Ausrichtung einer Markierung an der Vorderseite des Gehäuses der Einstellvorrichtung und
- Fig. 35: die gleiche Einstellvorrichtung wie die nach Fig. 29, jedoch in einer um 10° relativ zu einer vertikalen Ausrichtung auf einem Ventilgehäuse eingestellten Lage.

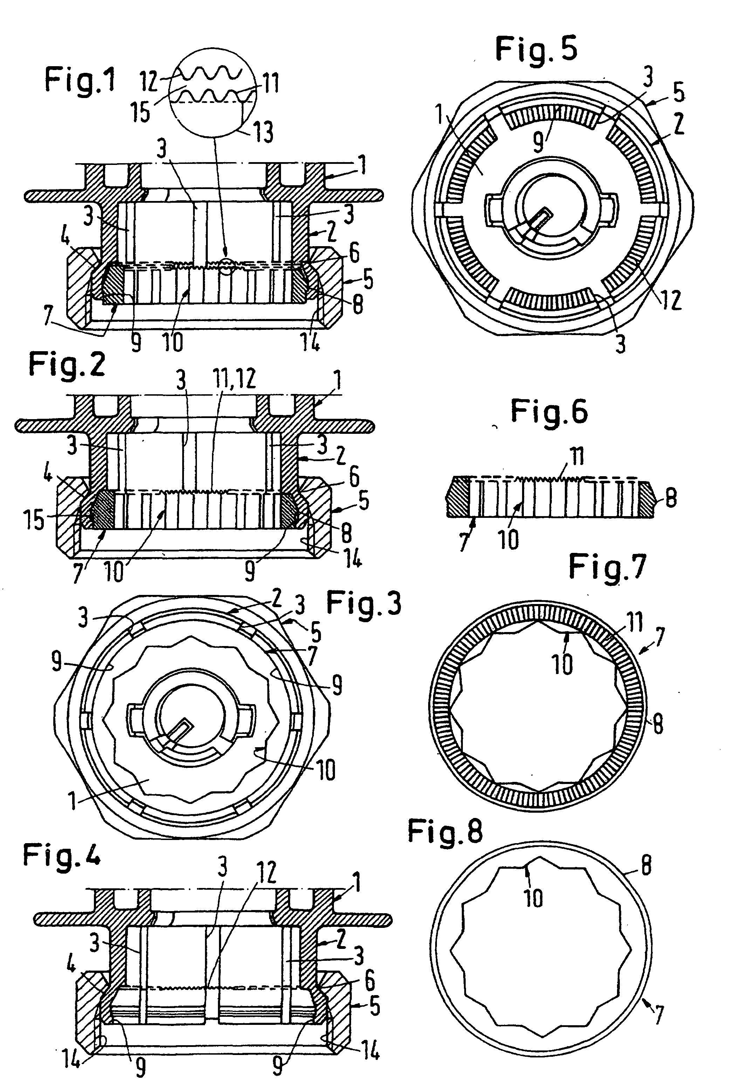

Die Einstellvorrichtung nach den Fig. 1 bis 8 hat ein Gehäuse 1 mit einem daran angeformten Stutzen 2 zum Anschließen der Einstellvorrichtung, hier eines Temperaturreglers, am Gehäuse eines nicht dargestellten Stellventils eines Heizkörpers, wobei das Gehäuse des Stellventils einen Außensechskant und einen axial daran anschließenden, radial vorstehenden Gewindeabschnitt aufweist. Der Stutzen 2 hat über seinen Umfang in gleichen Abständen verteilte axiale Schlitze 3, so daß er in axiale Federarme unterteilt ist, die eine umlaufende Hinterschneidung 4 aufweisen, hinter die eine Spannvorrichtung in Form einer Überwurfmutter 5 mit einem radial nach innen ragenden Vorsprung 6 durch axiales Aufschieben der Überwurfmutter 5 auf den Stutzen 2 unter radialer Zusammendrückung der Federarme einrasten kann. In den Stutzen 2 ist ein ringförmiger Adapter 7 im Schnappsitz eingesetzt, so daß er im ungespannten Zustand der Überwurfmutter 5 gegen ein unbeabsichtigtes axiales Entfernen aus dem Stutzen 2 gesichert ist. Zur Ausbildung des Schnappsitzes ist der Adapter 7 mit einem an seinem Außenumfang umlaufenden, radial nach außen ragenden Rastvorsprung 8 versehen, der beim Einführen des Adapters 7 in den Stutzen 2, nachdem die Überwurfmutter 5 axial bis gegen das Gehäuse 1 verschoben worden ist, unter radialer Aufspreizung der Federarme des Stutzens 2 hinter einen entsprechenden, radial nach innen ragenden Rastvorsprung 9 einrastet (einschnappt), der auf der Innenseite des Stutzens 2 umläuft, wobei er lediglich durch die Schlitze 3 unterbrochen ist.

Der ringförmige Adapter 7 hat ferner auf seiner Innenseite eine Profilierung 10 aus in gleichen Abständen über seinen Innenumfang verteilten Zähnen, hier zwölf etwa sägezahnförmigen Zähnen, deren Anzahl jedoch im Bereich von 4 bis 30 liegen kann, und auf seiner einen Stirnseite eine Verzahnung 11 aus ebenfalls gleichmäßig über den Umfang verteilten Zähnen, hier 120 Zähne, wobei die Anzahl der Zähne der Verzahnung 11 im Bereich von etwa 50 bis 200 liegen kann. Die Verzahnung 11 des Adapters 7 ist einer ihr entsprechenden Verzahnung 12 auf einer radialen inneren Ringschulter des Stutzens 2 zugekehrt, die ebenfalls lediglich durch die Schlitze 3 unterbrochen ist.

In dem Ausschnitt 13 der Fig. 1 sind die Verzahnungen 11 und 12 in größerem Maßstab dargestellt.

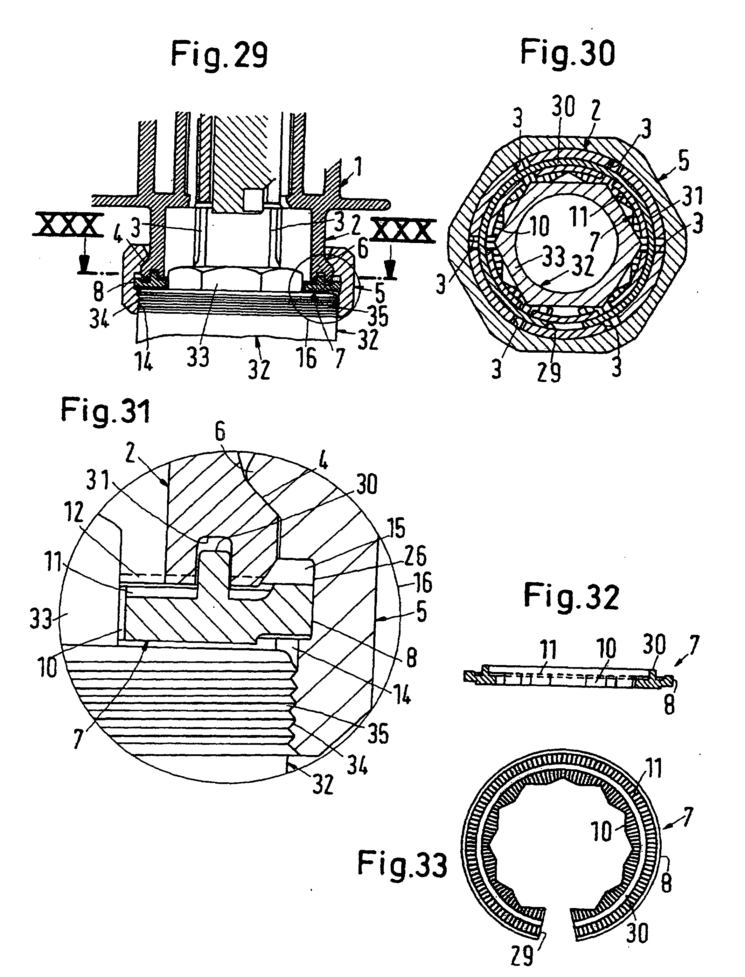

In der Lage nach Fig. 1, in der die Einstellvorrichtung bzw. der Temperaturregler noch nicht auf dem Außen-Mehrkant des Gehäuses des Heizkörperventils mittels der Überwurfmutter 5 festgespannt ist, haben die Verzahnungen 11 und 12 ein hinreichendes axiales Spiel 15, das wenigstens der Gesamthöhe der Verzahnungen 11 und 12 entspricht, um die Einstellvorrichtung in eine gewünschte Drehwinkellage relativ zum Ventil durch vorherige relative Verdrehung von Adapter 7 und Stutzen 2 bringen zu können. Nach dem Aufschieben der Einstellvorrichtung über den Außen-Mehrkant des Gehäuses des Heizkörperventils, greift der Außen-Mehrkant mit seinen sechs Kanten in jede zweite Lücke der Profilierung 10 des Adapters 7 ein, so daß der Adapter 7 nicht mehr relativ zum Ventilgehäuse verdrehbar ist. Dann wird die Überwurfmutter 5 mit ihrem Innengewinde 14 auf dem sich an den Außen-Mehrkant des Ventilgehäuses axial anschließenden Gewindeabschnitt festgezogen, bis die axial äußere Stirnseite des Adapters 7 an der radialen Schulter des Außengewindeabschnitts anliegt und die Verzahnungen 10 und 11 von Adapter 7 und Stutzen 2 ineinandergreifen, wie es in Fig. 2 dargestellt ist. In dieser Lage ist auch die Einstellvorrichtung nicht mehr relativ zu dem Ventil des Heizkörpers verdrehbar. Dagegen sind Stutzen 2 und Adapter 7 vorher in der Lage nach Fig. 1 aufgrund der sehr viel kleineren Teilung der Verzahnungen 11 und 12 im Vergleich zu der der Profilierung 10 und des Außen-Mehrkants des Ventilgehäuses feinstufig relativ zueinander verdrehbar, so daß das Gehäuse 1 der Einstellvorrichtung mit dem daran nach unten gerichteten Gehäuseteil 29 und einer Markierung 30 an dem Gehäuse 1 gemäß Fig. 29 nahezu vertikal ausgerichtet sind.

Aufgrund des Schnappsitzes des Adapters 7 im Stutzen 2 des Gehäuses 1 kann er nicht unabsichtlich aus dem Stutzen 2 herausfallen, sei es bevor die Einstellvorrichtung am Ventil befestigt ist oder wenn sie wieder vom Ventil entfernt wird. Dies erleichtert das Anbringen und Entfernen der Einstellvorrichtung am bzw. vom Ventil.

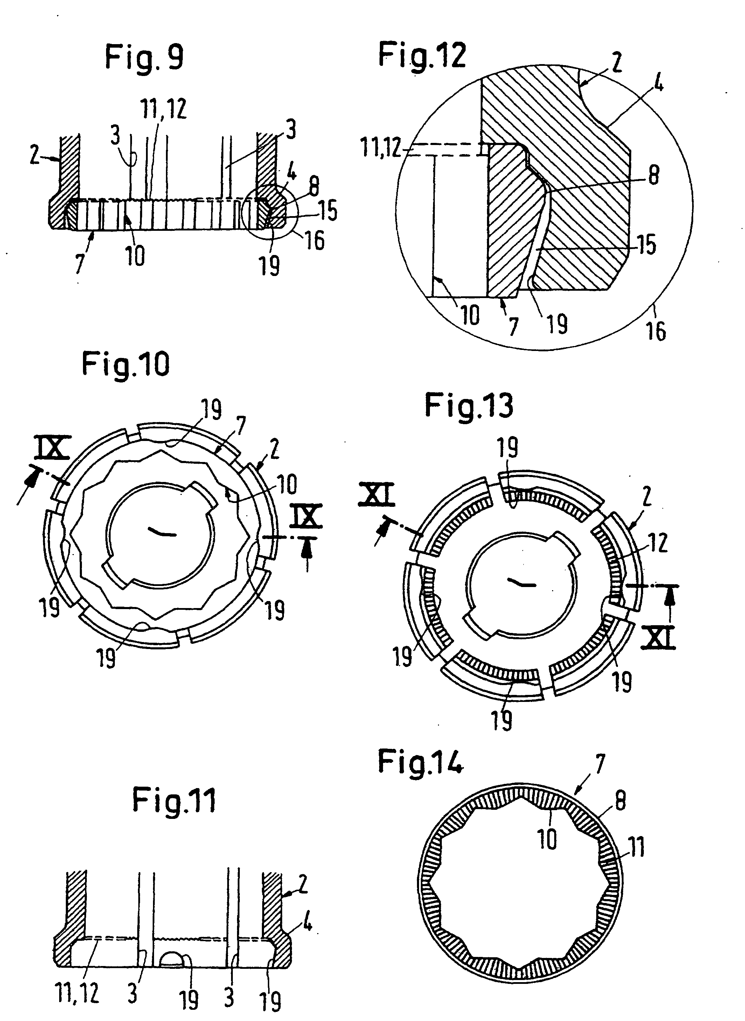

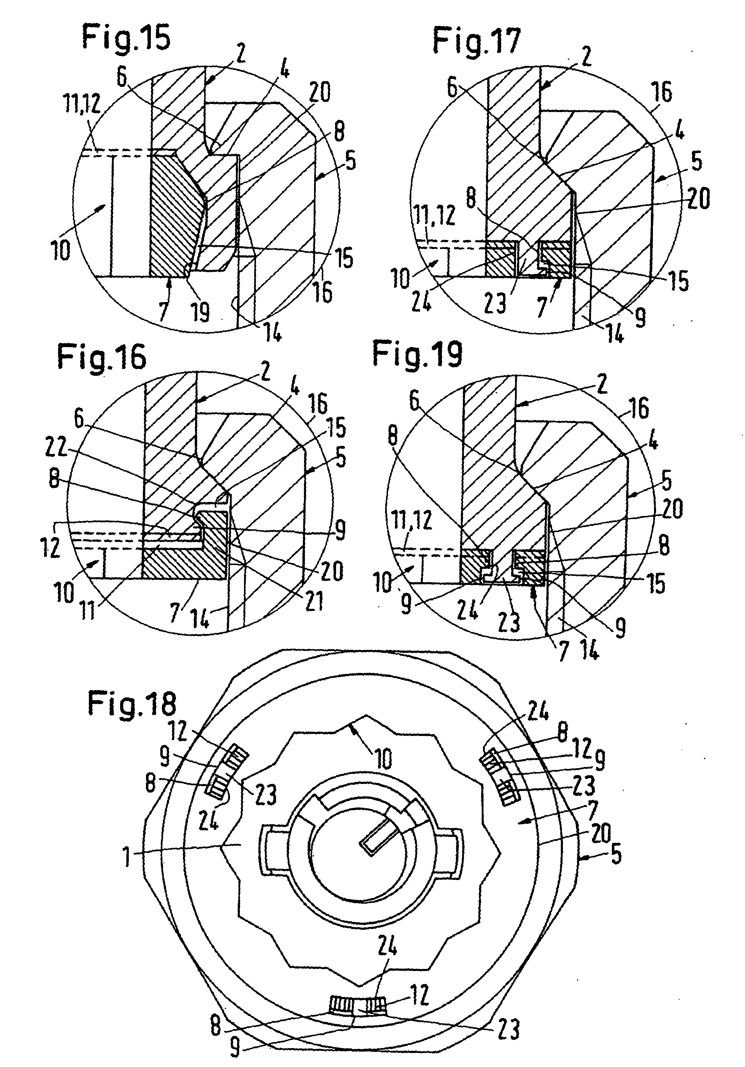

Bei dem Ausführungsbeispiel nach den Fig. 9 bis 14 sind auf der Innenseite des Stutzens 2 anstelle des Rastvorsprungs 9 nach den Fig. 1 bis 4 in Umfangsrichtung kürzere, in gleichmäßigen Winkelabständen, hier z.B. von 90°, verteilte noppenartige Rastvorsprünge 19 zur Ausbildung des Schnappsitzes für den Adapter 7 vorgesehen. Es ist zwar möglich, alle Federarme mit solchen noppenartigen Rastvorsprüngen 19 zu versehen. Wenn weniger Vorsprünge 19 als Federarme vorgesehen sind, brauchen jedoch beim Einsetzen des Adapters 7 in den Stutzen 2 nur diejenigen vier der sechs oder mehr Federarme des Stutzens 2 durch den Rastvorsprung 8 des Adapters 7 gespreizt zu werden, die mit einem der Rastvorsprünge 19 versehen sind. Dies erleichtert das Zusammenstecken von Stutzen 2 und Adapter 7. Ferner erstrecken sich die Zähne der Verzahnung 11 auch über die Stirnseiten der Zähne der Profilierung 10 (vgl. die Fig. 7 und 14). Im übrigen gleicht das Ausführungsbeispiel nach den Fig. 9 bis 14 dem Ausführungsbeispiel nach den Fig. 1 bis 8.

Das Ausführungsbeispiel nach Fig. 15 unterscheidet sich von dem zweiten Ausführungsbeispiel nach den Fig. 9 bis 14 nur dadurch, daß die Hinterschneidung 4 nicht schräg, sondern radial und auch die sich an dieser Hinterschneidung bzw. Schulter 4 anlegende Fläche des Vorsprungs 6 der Überwurfmutter 5 ebenfalls radial verläuft. Darüber hinaus befindet sich zwischen der radial vorstehenden Außenseite des Stutzens 2 und der Innenseite der Überwurfmutter 5 ein Spiel 20, so daß diese Seiten nicht aneinander anliegen und dadurch eine Verdrehung des Adapters 7 im Stutzen 2 vor dem Festziehen der Mutter 5 zur Einstellung der gewünschten Drehwinkellage, während sich die Verzahnungen 11, 12 außer Eingriff befinden, erleichtert wird.

Zwischen den Rastvorsprüngen 8 und 19 befindet sich das axiale Spiel 15, das wenigstens der Gesamthöhe der Verzahnungen 11 und 12 entspricht, so daß die Verzahnungen 11, 12 vor dem Festziehen der Überwurfmutter 5 außer Eingriff gehalten oder gebracht werden können, um Stutzen 2 und Adapter 7 in die gewünschte relative Drehwinkellage zu bringen, bevor die Überwurfmutter 5 auf dem Ventilgehäuse festgezogen wird und dadurch die Verzahnungen 11, 12 in Eingriff gebracht werden.

Das Ausführungsbeispiel nach Fig. 16 unterscheidet sich von den vorhergehenden im wesentlichen dadurch, daß der umlaufende Rastvorsprung 8 des Adapters 7 zur Ausbildung des Schnappsitzes an einer umlaufenden, radial äußeren, axial dem Stutzen 2 zugekehrten Wand 21 radial nach innen ragt und der Rastvorsprung 9 des Stutzens 2 radial nach außen ragt und lediglich durch die in dem vergrößerten Ausschnitt 16 nicht dargestellten Schlitze 3 unterbrochen ist. Ferner schließt sich an den Vorsprung 9 des Stutzens 2 eine ebenfalls lediglich durch die Schlitze 3 unterbrochene Ringnut 22 an, in die der Rastvorsprung 8 des Adapters 7 nach Überwindung des Rastvorsprungs 9 einschnappt. Zwischen der Stirnseite der Wand 21 und der ihr zugekehrten Innenseite der Ringnut 22 bzw. zwischen den Rastvorsprüngen 8 und 9 befindet sich wiederum das axiale Spiel 15, das wenigstens der Gesamthöhe der Verzahnungen 11 und 12 entspricht, so daß die Verzahnungen 11, 12 vor dem Festziehen der Überwurfmutter 5 außer Eingriff gehalten oder gebracht werden können, um Stutzen 2 und Adapter 7 in die gewünschte relative Drehwinkellage zu bringen, bevor die Überwurfmutter 5 auf dem Ventilgehäuse festgezogen wird und dadurch die Verzahnungen 11, 12 in Eingriff gebracht werden.

Die Verzahnung 12 befindet sich an der Stirnseite des Stutzens 2. Statt über den gesamten Umfang durchgehend, kann die Wand 21 auch durch axiale Schlitze in Federarme unterteilt sein.

Bei dem Ausführungsbeispiel nach den Fig. 17 und 18 sind die Verzahnungen 11 und 12 ebenfalls an der dem Stutzen 2 zugekehrten Stirnseite des Adapters 7 bzw. der Stirnseite des Stutzens 2 ausgebildet. Ferner sind an der Stirnseite des Stutzens 2 axiale Fortsätze 23 in gleichen Winkelabständen um die Mittelachse des Stutzens 2 herum angeformt und mit den radial nach außen ragenden Rastvorsprüngen 9 an ihren Enden versehen. Der Adapter 7 ist mit bogenförmigen, axial durchgehenden Schlitzen 24 versehen, die sich konzentrisch zur Mittelachse des Stutzens 2 im gleichen Abstand von dieser über einen Winkelbereich erstrecken, der kleiner als 360°, aber größer als mehrere Teilungen der Verzahnung 12 und als die in Umfangsrichtung gemessene Breite jedes der Fortsätze 23 ist. Radial nach innen in jeden Schlitz 24 ragt jeweils einer der Rastvorsprünge 8 des Adapters 7. Beim Zusammenstecken von Stutzen 2 und Adapter 7 werden die Fortsätze 23 in jeweils einen der Schlitze 24 eingeführt, wobei dann die Rastvorsprünge 9 hinter den Rastvorsprüngen 8 einschnappen. Zu diesem Zweck sind die Schlitze 24 in radialer Richtung geringfügig schmaler als die Fortsätze 23 und die Rastvorsprünge 9 zusammen. Auch hier ist wiederum das axiale Spiel 15 zwischen den Rastvorsprüngen 8 und 9 vorgesehen. Auch in anderer Hinsicht kann dieses Ausführungsbeispiel ebenso wie eines der vorhergehenden ausgebildet sein.

Das Ausführungsbeispiel nach Fig. 19 unterscheidet sich von dem nach Fig. 17 lediglich dadurch, daß die Schlitze 24 jeweils zwei sich gegenüberliegende, dem jeweiligen Fortsatz 23 zugekehrte Rastvorsprünge 8 und die Fortsätze 23 zwei voneinander abgekehrte Rastvorsprünge 9 aufweisen.

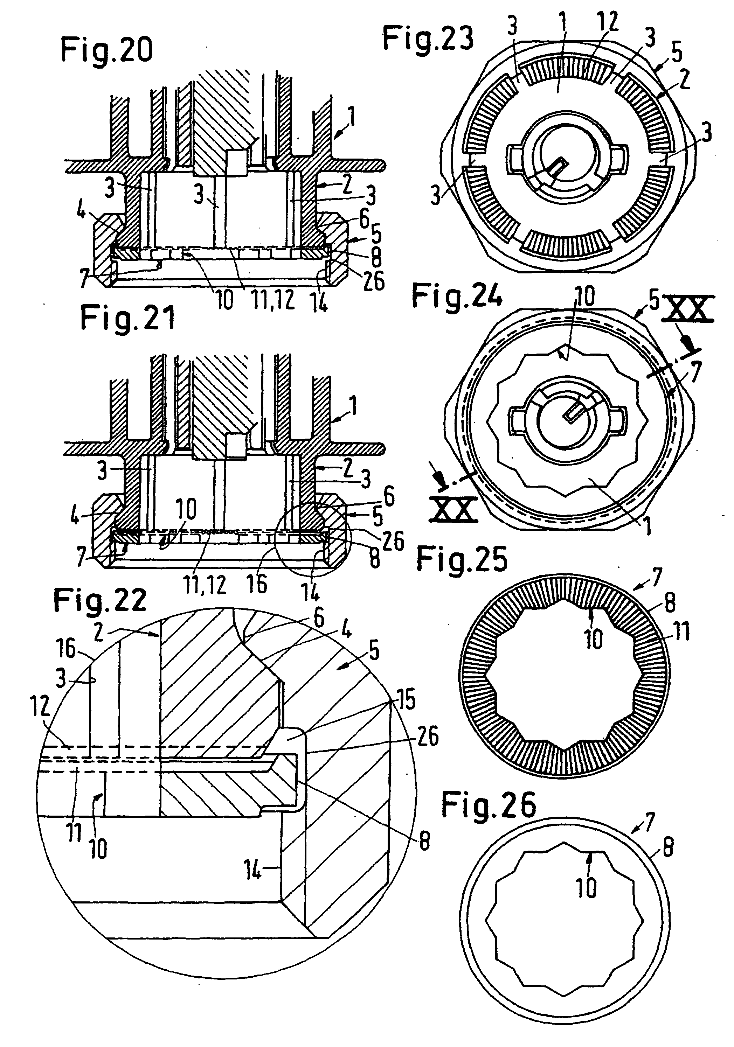

Bei dem Ausführungsbeispiel nach den Fig. 20 bis 26 ist die Verzahnung 12 des Stutzens 2 wiederum an einer Stirnseite des Stutzens 2, die Verzahnung 11 des Adapters 7 an einer der Verzahnung 12 des Stutzens 2 zugekehrten Stirnseite des Adapters 7 und die Profilierung 10 des Adapters 7 an einer inneren Umfangsseite des Adapters 7 ausgebildet. Ferner ist der Adapter 7 nicht unmittelbar, sondern mittelbar im Schnappsitz am Stutzen 2 arretierbar. Zu diesem Zweck ist die Überwurfmutter 5 zwischen ihrem radialen Rastvorsprung 6 und ihrem Innengewinde 14 mit einer Ringnut 26 versehen. In diese Ringnut 26 kann der Adapter 7 mit seinem radial nach außen ragenden Rastvorsprung 8 über das Innengewinde 14 der Überwurfmutter 5 hinweg einrasten. Bei der Ringnut 26 kann es sich um einen gewindefreien Abschnitt der Innenseite der Überwurfmutter 5 handeln. Um das Hineindrücken des Adapters 7 in die Ringnut 26 zu ermöglichen oder zu erleichtern, kann der Adapter 7 aus einem hartelastischen Material bestehen und/oder als C-Ring, d.h. mit einem axial durchgehenden Schlitz, ausgebildet sein. Alternativ kann der Adapter 7 auf seinem Außenumfang anstelle des Rastvorsprungs 8 mit einem Gewinde versehen sein, das mit dem Innengewinde 14 der Überwurfmutter 5 zusammenpaßt, so daß der Adapter 7 durch das Innengewinde 14 hindurchgeschraubt werden kann, bis er vollständig in der Ringnut 26 liegt.

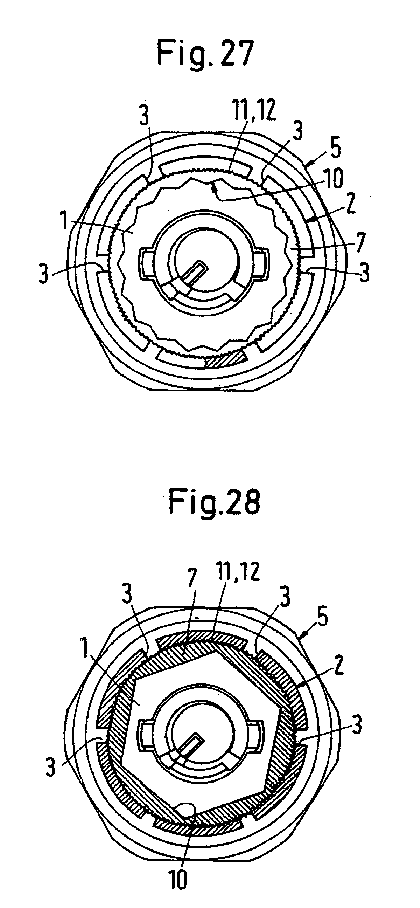

Bei dem Ausführungsbeispiel nach Fig. 27 ist die Verzahnung 11 des Adapters 7 an seinem äußeren Umfang und die Verzahnung 12 des Stutzens 2 an seinem inneren Umfang ausgebildet. Der Adapter 7 wird in dem Stutzen 2 reibschlüssig durch die Federkraft der Federarme des Stutzens 2 festgehalten, so daß er nicht unabsichtlich aus dem Stutzen 2 herausfallen kann. Es ist aber auch möglich, seine Lage formschlüssig im Schnappsitz zu sichern. Ferner hat die Profilierung 10 bei diesem Ausführungsbeispiel achtzehn statt zwölf Zähne.

Das Ausführungsbeispiel nach Fig. 28 unterscheidet sich von dem nach Fig. 27 lediglich dadurch, daß die Profilierung 10 als Mehrkant, hier als Sechskant, ausgebildet ist.

Das Ausführungsbeispiel nach den Fig. 29 bis 33 unterscheidet sich von dem nach den Fig. 20 bis 26 dadurch, daß der Adapter 7 als C-förmiger Federring mit einem Schlitz 29 und einer axial auf seiner mit der Verzahnung 11 versehenen Stirnseite koaxial vorstehenden Rippe 30 versehen ist, die in eine Ringnut 31 in der Stirnseite des Stutzens 2 eingreift. Die Ringnut 31 ist lediglich durch die Schlitze 3 unterbrochen. Die C-Form des Adapters 7 erleichtert das Einsetzen des Adapters 7 in den Stutzen 2. Die Fig. 29 bis 31 zeigen ferner den Anschlußteil 32 des Ventils, der einen mit einer vorbestimmten Teilung profilierten Abschnitt 33, hier einen Außensechskant, und einen sich axial daran anschließenden Abschnitt 34 mit einem größeren Außendurchmesser als der des Abschnitts 33 und einem Außengewinde 35 aufweist.

Wenn bei dem Ausführungsbeispiel nach den Fig. 29 bis 33 die Überwurfmutter 5, nach dem Aufschieben des Stutzens 2 samt Adapter 7 in der gewünschten Drehwinkellage auf den Anschlußteil 32, mit ihrem Innengewinde 14 auf dem Außengewinde 35 festgezogen wird, werden die zwischen den Schlitzen 3 liegenden Federarme des Stutzens 2 durch den Vorsprung 6 der Überwurfmutter 5 über die schräge Hinterschneidung 4 des Stutzens 2 radial nach innen gebogen. Dabei drücken die Federarme den C-förmigen Adapter 7 radial zusammen, so daß er auf dem sechskantig profilierten Abschnitt 33 des Anschlußteils 32 festgeklemmt wird. Dabei greifen die Kanten des Abschnitts 33 in Zahnlücken der Verzahnung 10 ein. Der Adapter 7 läßt sich dann nicht mehr relativ zum Anschlußteil 32 des Ventils drehen. Gleichzeitig greifen auch die Verzahnungen 11 und 12 ineinander. Der Stutzen 2 sowie das Gehäuse 1 und somit der gesamte Temperaturregler nehmen dann unverdrehbar die gewünschte Drehwinkellage relativ zum Ventil ein. Nach dem Lösen der Überwurfmutter 5 kann der Temperaturregler unter Mitnahme des Adapters 7 vom Anschlußteil 32 abgezogen werden. Sowohl beim Aufschieben auf den als auch beim Abziehen von dem Anschlußteil 32 kann sich der Adapter 7 nicht unabsichtlich vom Temperaturregler lösen. Gewünschtenfalls ist es jedoch auch möglich, erst den Adapter 7 auf den Anschlußteil 32 aufzuschieben und dann den Stutzen 2 mit dem Temperaturregler in der gewünschten Drehwinkellage über den Adapter 7 aufzuschieben und anschließend die Überwurfmutter 5 festzuziehen.

Diese Funktion gilt prinzipiell für alle Ausführungsbeispiele.

Die Fig. 34 und 35 stellen eine erfindungsgemäße Einstellvorrichtung in Form eines Temperaturreglers (Thermostataufsatzes) für ein Heizkörperventil in Vorderansicht dar, wobei das Gehäuse 1 mit einem nach unten ragenden Gehäuseteil 36 zur Aufnahme einer elektronischen oder ferngesteuerten Stelleinrichtung für den Sollwertgeber des Temperaturreglers ausgebildet und an der Vorderseite des den Temperaturfühler aufweisenden Gehäuseteils mit einer etwa dreieckförmigen, mit der Spitze nach oben gerichteten Markierung 37 versehen ist. In der Lage nach Fig. 34 ist der Temperaturregler auf dem Gehäuse eines Heizkörperventils mit Hilfe des ringförmigen Adapters 7 so ausgerichtet, daß das Gehäuseteil 36 und die Markierung 37 vertikal und damit optisch nicht störend ausgerichtet sind. In der Lage nach Fig. 35 sind das Gehäuseteil 36 und die Markierung 37 dagegen aufgrund einer Fehlausrichtung oder unzureichenden Verstellbarkeit ihres Drehwinkels relativ zum Gehäuse des Heizkörperventils optisch störend ausgerichtet, d.h. um 10° gegenüber der Vertikalen verdreht. Erfindungsgemäß ist die Ausrichtung der Einstellvorrichtung zumindest annähernd vertikal möglich, wie es in Fig. 34 dargestellt ist.

Weitere Abwandlungen der dargestellten Ausführungsbeispiele können beispielsweise darin bestehen, daß bei Ventilgehäusen ohne Gewinde, aber mit einem Außenmehrkant, anstelle der Überwurfmutter eine andere Spannvorrichtung verwendet wird, z.B. eine Schlauchschelle oder dergleichen. Ferner kann die innere Profilierung 10 des Adapters 7 statt als mehrkantige Verzahnung als eine andere Art von Verzahnung, beispielsweise in Form von Noppen oder anders geformten Vorsprüngen, z.B. linsenförmigen Vorsprüngen, ausgebildet sein. Auch die mit im Vergleich zu der Profilteilung eines Ventils, an dem die Einstellvorrichtung angeschlossen werden soll, mit sehr viel kleineren Teilungen ausgebildeten Verzahnungen 11 und 12 können andere Zahnformen als die in Fig. 1 in dem vergrößerten Ausschnitt 13 dargestellten, etwa sinusförmigen Verzahnungen, haben, z.B. Sägezahnform. Ferner können die Teilungen der Verzahnungen 11 und 12 unterschiedlich sein, sofern nur eine sehr viel kleiner als die der Profilierung 10 ist. Sodann ist es möglich, die Verzahnungen 11 und 12 wegzulassen, so daß die einander zugekehrten Stirnseiten von Stutzen 2 und Adapter 7 nur reibschlüssig in der gewünschten relativen Drehwinkellage drehfesst zusammengehalten werden.

## Patentansprüche

1. Einstellvorrichtung für ein Ventil, insbesondere Temperaturregler für ein Heizkörperventil, mit einem durch axiale Schlitze (3) in Federarme unterteilten Stutzen (2) für den Anschluß an einen mit einer vorbestimmten Teilung profilierten Anschlußteil (32) des Ventils; mit einem ringförmigen Adapter (7), der mit dem Stutzen (2) in abgestuften Drehwinkelstellungen relativ zum Ventil unverdrehbar kuppelbar ist und eine mit der Profilierung des Anschlußteils (32) des Ventils unverdrehbar in Eingriff bringbare Profilierung (10) mit einer vorbestimmten Teilung aufweist; und mit einer den Stutzen (2) umgebenden Spannvorrichtung (5), die im gespannten Zustand die Federarme des Stutzens (2) radial gegen den Anschlußteil (32) des Ventils drückt, **dadurch gekennzeichnet, daß** der Adapter (7) an dem Stutzen (2) im ungespannten Zustand der Spannvorrichtung (5) gegen ein unbeabsichtigtes axiales Entfernen arretiert ist.

2. Einstellvorrichtung nach Anspruch 1, **dadurch gekennzeichnet, daß** der Stutzen (2) mit einer Verzahnung (12) versehen ist und der Adapter (7) eine mit der Verzahnung (12) des Stutzens (2) unverdrehbar in Eingriff bringbare Verzahnung (11) mit einer vorbestimmten Teilung aufweist und am Stutzen (2) axial anbringbar ist; wobei wenigstens zwei aller Teilungen voneinander abweichen.

3. Einstellvorrichtung nach Anspruch 1 oder 2, **dadurch gekennzeichnet, daß** der Adapter (7) im Schnappsitz am Stutzen (2) arretiert ist.

4. Einstellvorrichtung nach einem der Ansprüche 1 bis 3, **dadurch gekennzeichnet, daß** der Adapter (7) und der Stutzen (2) jeweils wenigstens einen radialen Rastvorsprung (8, 9; 19) aufweisen, die sich geringfügig überlappen und von denen wenigstens der eine (9; 19) der sich überlappenden Rastvorsprünge (8, 9; 19) durch den anderen beim Zusammensetzen von Stutzen (2) und Adapter (7) radial zur Seite gedrückt wird.

5. Einstellvorrichtung nach Anspruch 2, **dadurch gekennzeichnet, daß** die Verzahnung (12) des Stutzens (2) am inneren Umfang oder einer radialen inneren Ringschulter oder einer Stirnseite des Stutzens (2) ausgebildet und die Verzahnung (11) des Adapters (7) der Verzahnung (12) des Stutzens (2) zugekehrt ist.

6. Einstellvorrichtung nach Anspruch 2, **dadurch gekennzeichnet, daß** die Verzahnung (12) des Stutzens (2) an einer Stirnseite des Stutzens (2), die Verzahnung (11) des Adapters (7) an einer der Verzahnung (12) des Stutzens (2) zugekehrten Stirnseite des Adapters (7) und die Profilierung (10) des Adapters (7) an einer inneren Umfangsseite des Adapters (7) ausgebildet ist, daß die Spannvorrichtung (5) eine Überwurfmutter ist, die mit einem radial inneren Vorsprung (6) eine äußere Hinterschneidung (4) des Stutzens (2) hintergreift, daß der Adapter (7) in eine Ringnut (26) zwischen dem radialen Vorsprung (6) der Überwurfmutter (5) und ihrem Innengewinde (14) über das Innengewinde (14) hinweg einrastbar oder durch das Innengewinde (14) hindurch einschraubbar ist.

7. Einstellvorrichtung nach einem der Ansprüche 2, 5 und 6, **dadurch gekennzeichnet, daß** nach dem Anbringen des Adapters (7) am Stutzen (2) die Verzahnungen (11, 12) durch das Spannen der Spannvorrichtung (5) in Eingriff gelangen und bis zum gegenseitigen Eingriff durch das Spannen ein hinreichendes axiales Spiel (15) zwischen Adapter (7) und Stutzen (2) verbleibt, das es ermöglicht, die Verzahnungen (11, 12) von Adapter (7) und Stutzen (2) für eine Verdrehung des Adapters (7) relativ zum Stutzen (2) und damit der Einstellvorrichtung in eine gewünschte Drehwinkellage relativ zum Ventil außer Eingriff zu halten.

8. Einstellvorrichtung nach einem der Ansprüche 2, 5, 6 und 7, **dadurch gekennzeichnet, daß** die Teilungen der Verzahnung (12) des Stutzens (2) und der Verzahnung (11) des Adapters (7) gleich und kleiner als die Teilung der Profilierung (10) des Adapters (7) sind und die Teilung der Profilierung (10) des Adapters kleiner als die der Profilierung des Ventils ist.

## Claims

1. Setting device for a valve, particularly a temperature controller for a radiator valve, with a standpipe (2) divided into spring arms by axial slots (3) for the connection to a profiled connecting part (32) of the valve having a predetermined sectioning; with an annular adapter (7), which is unrotatably connectable with the standpipe (2) in stepped rotation angle positions in relation to the valve, and a profiling (10) with a predetermined sectioning, which can be brought to an unrotatable engagement with the profiling of the connecting part (32) of the valve; and with clamping fixtures (5) surrounding the standpipe (2), said clamping fixtures pressing, in the tightened state, the spring arms of the standpipe (2) radially against the connecting part (32) of the valve, **characterised in that** in the untightened state of the clamping fixtures (5), the adapter (7) is fixed on the standpipe (2) against an unintentional axial removal.

2. Setting device according to claim 1, **characterised in that** the standpipe (2) is provided with a toothing (12) and the adapter (7) has a toothing (11) with a predetermined sectioning, which can be brought to unrotatable engagement with the toothing (12) of the standpipe (2), and be arranged axially on the standpipe (2); at least two of all the sectionings deviating from each other.

3. Setting device according to claim 1 or 2, **characterised in that** the adapter (7) is fixed in the snap lock on the standpipe (2).

4. Setting device according to one of the claims 1 to 3, **characterised in that** the adapter (7) and the standpipe (2) each have at least one radial catch projection (8, 9; 19), which overlap slightly, and of which at least one (9; 19) of the overlapping catch projections (8, 9; 19) is pushed radially aside by the others when fitting the standpipe (2) and the adapter (7).

5. Setting device according to claim 2, **characterised in that** the toothing (12) of the standpipe (2) is formed on the inner circumference or a radial inner annular shoulder or a front side of the standpipe (2) and that the toothing (11) of the adapter (7) is facing the toothing (12) of the standpipe (2).

6. Setting device according to claim 2, **characterised in that** the toothing (12) of the standpipe (2) is formed on a front side of the standpipe (2), the toothing (11) of the adapter (7) is formed on a front side of the adapter (7) facing the toothing (12) of the standpipe (2) and the profiling (10) of the adapter (7) is formed on an inner circumference side of the adapter (7), that the clamping fixtures (5) is a union nut, with a radial inner projection (6) catching behind an outer undercut (4) of the standpipe (2), that the adapter (7) can engage in an annular groove (26) between the radial projection (6) of the union nut (5) and its inner thread (14) across the inner thread (14) or can be screwed through the inner thread (14).

7. Setting device according to one of the claims 2, 5 and 6, **characterised in that** after fitting the adapter (7) on the standpipe (2) the toothings (11, 12) are brought to engage by tightening the clamping fixtures (5) and that until the mutual engagement caused by the tightening a sufficient axial play (15) remains between the adapter (7) and the standpipe (2), which makes it possible to keep the toothings (11, 12) of the adapter (7) and the standpipe (2) from engaging for the purpose of turning the adapter (7) in relation to the standpipe (2) and thus the setting device to a desired rotation angle position in relation to the valve.

8. Setting device according to one of the claims 2, 5, 6 and 7, **characterised in that** the sectionings of the toothing (12) of the standpipe (2) and the toothing (11) of the adapter (7) are equal and smaller than the sectioning of the profiling (10) of the adapter (7) and the sectioning of the profiling (10) of the adapter is smaller than the profiling of the valve.

## Revendications

1. Dispositif de réglage pour une soupape, notamment un régulateur de température pour une soupape de radiateur, comportant un embout (2) divisé par des fentes axiales (3) de manière à former des bras élastiques, pour le raccordement à une partie de raccordement (32) de la soupape, profilée avec un pas de division prédéterminé; un adaptateur de forme annulaire (7), qui peut être couplé à l'embout (2) dans des positions angulaires étagées, sans possibilité de rotation par rapport à la soupape, et un profil (10) qui peut être amené en prise, sans possibilité de rotation, avec le profil de la partie de raccordement (32) de la soupape et comportant un pas de division prédéterminé; et un dispositif de serrage (5) qui entoure l'embout et, à l'état serré, serre les bras élastiques de l'embout (2) radialement contre la partie de raccordement (32) de la soupape, **caractérisé en ce que** l'adaptateur (7) est bloqué sur l'embout (2) contre un retrait axial intempestif, lorsque le dispositif de serrage (5) est à l'état desserré.

2. Dispositif de réglage selon la revendication 1, **caractérisé en ce que** l'embout (2) est pourvu d'une denture (12), et que l'adaptateur (7) comporte une denture (11) qui peut être amenée à engrener sans possibilité de rotation avec la denture (12) de l'embout (2), comporte un pas de division prédéterminé et peut être montée axialement sur l'embout (2), au moins deux de tous les pas de division étant différents l'un de l'autre.

3. Dispositif de réglage selon la revendication 1 ou 2, **caractérisé en ce que** l'adaptateur (7) est bloqué selon un montage par encliquetage sur l'embout (2).

4. Dispositif de réglage selon l'une des revendications 1 à 3, **caractérisé en ce que** l'adaptateur (7) et l'embout (2) possèdent chacun au moins une partie saillante radiale d'encliquetage (8,9;19), qui se chevauchent légèrement, l'une au moins (9;19) des parties saillantes d'encliquetage en chevauchement (8,9;19) étant repoussée radialement vers le côté par l'autre partie saillante lors de l'assemblage de l'embout (2) et de l'adaptateur (7).

5. Dispositif de réglage selon la revendication 2, **caractérisé en ce que** la denture (12) de l'embout (2) est formée sur la périphérie intérieure ou sur un épaulement intérieur radial ou sur une face frontale de l'embout (2) et que la denture (11) de l'adaptateur (7) est tournée vers la denture (12) de l'embout (2).

6. Dispositif de réglage selon la revendication 2, **caractérisé en ce que** la denture (12) de l'embout (2) est formée sur une face frontale de l'embout (2), que la denture (11) de l'adaptateur (7) est formée sur une face frontale de l'adaptateur (7) tournée vers la denture (12) de l'embout (2) et que le profil (10) de l'adaptateur (7) est formé sur une face intérieure périphérique de l'adaptateur (7), que le dispositif de serrage (5) est un écrou-raccord, qui s'engage par un appendice saillant radial intérieur (6) derrière une partie en contre-dépouille extérieure (4) de l'embout (2), que l'adaptateur (7) peut être encliqueté dans une gorge annulaire (26) située entre l'appendice saillant radial (6) de l'écrou-raccord (5) et son taraudage (14), au-dessus de ce dernier, ou peut être vissé dans le taraudage (14).

7. Dispositif de réglage selon l'une des revendications 2, 5 et 6, **caractérisé en ce qu'**après le montage de l'adaptateur (7) sur l'embout (2), les dentures (11,12) engrènent sous l'effet du serrage du dispositif de serrage (5) et que jusqu'à l'engrènement réciproque sous l'effet du serrage, il subsiste entre l'adaptateur (7) et l'embout (2) un jeu axial suffisant (15) qui permet de retenir hors d'engrènement les dentures (11,12) de l'adaptateur (7) et de l'embout (2) pour une rotation de l'adaptateur (7) par rapport à l'embout (2) et par conséquent du dispositif de réglage dans une position angulaire désirée par rapport à la soupape.

8. Dispositif de réglage selon l'une des revendications 2, 5, 6 et 7, **caractérisé en ce que** les pas de division de la denture (12) de l'embout (2) et de la denture (11) de l'adaptateur (7) sont égaux ou inférieurs aux pas de division du profil (10) de l'adaptateur (7) et que le pas de division du profil (10) de l'adaptateur est inférieur au pas de division du profil de la soupape.
